# EUROPÄISCHE PATENTSCHRIFT

(11) **EP 3 728 757 B1**
(45) Veröffentlichungstag und Bekanntmachung des Hinweises auf die Patenterteilung: **20.04.2022**
(21) Anmeldenummer: 18707264.0
(22) Anmeldetag: 08.02.2018
(51) Int. Cl.: E04C 2/38, F16B 5/00, F16B 5/07

(54) **VERFAHREN ZUM HERSTELLEN EINES PROFILVERBUNDS MIT SPEZIELLEN VERBINDUNGSELEMENTEN**
PROCEDURE FOR THE PRODUCTION OF A PROFILE COMPOSITE WITH SPECIAL CONNECTION ELEMENTS
PROCÉDÉ DE RÉALISATION D'ASSEMBLAGE DES PROFILES AVEC DE CONNEXION SPÉCIALES

(43) Veröffentlichungstag der Anmeldung: 28.10.2020
(73) Patentinhaber: Otto Fuchs - Kommanditgesellschaft -, 58540 Meinerzhagen (DE)
(72) Erfinder: THOMZICK, Gerd, 51709 Marienheide (DE); SCHULTE, Christoph, 58540 Meinerzhagen (DE); SCHLIFFKE, Hendrik, 58566 Kierspe (DE); ADLEFF, Christian, 51647 Gummersbach (DE)
(74) Vertreter: Haverkamp Patentanwälte PartG mbB
(86) Internationale Anmeldenummer: PCT/EP2018/053177
(87) Internationale Veröffentlichungsnummer: WO 2019/154500

(56) Entgegenhaltungen:
- EP-A1- 0 508 083
- DE-A1- 3 423 967
- DE-U- 7 112 240
- DE-U1- 9 411 672
- DE-U1-202005 008 016
- DE-U1-202016 104 740
- DE-U1-202016 104 744

## Beschreibung

Die Erfindung betrifft ein Verfahren zum Herstellen eines Profilverbundes.

Ein solcher Profilverbund ist aus DE 20 2005 008 016 U1 bekannt. Bei diesem vorbekannten Profilverbund sind zwei Profile längsseitig in Richtung der Längsersteckung des Profils formschlüssig miteinander in der Ebene des Profilverbundes miteinander verbunden. Zu diesem Zweck ist an einen Gurt eines solchen Profils längsseitig jeweils eine Hakenleiste angeformt. Die durch die Hakenvorsprünge bewirkte Hakenausbildung der beiden miteinander in Eingriff zu stellenden Hakenleisten ist jeweils in die entgegengesetzte Richtung weisend, so dass die beiden Hakenleisten klauenartig mit ihren Hakenvorsprüngen miteinander in Eingriff gestellt werden können und in dem erstellten Profilverbund in dieser Art und Weise miteinander in Eingriff gestellt sind. Auf diese Weise sind die beiden Profile in der Profilebene quer zu ihrer Längserstreckung formschlüssig miteinander verbunden. Der Hakenvorsprung der Hakenleiste des ersten Profils ist durch einen Verankerungskanal bereitgestellt, in den durch einen Kaltfügeprozess der Hakenvorsprung der Hakenleiste des zweiten Profils in den durch den Verankerungskanal bereitgestellten Hinterschnitt eingreifend eingebogen wird. Bei diesem vorbekannten Profilverbund ist an die Hakenleiste zweiten Profils eine Stellleiste angeformt. Die Stellleiste ist rückseitig an die Hakenleiste bezüglich des Hakenvorsprunges angeformt. Vor Erstellen des Profilverbundes befindet sich diese in einer Stellung, damit durch eine Kraftbeaufschlagung quer zur Höhe der Profile diese zusammen mit dem Hakenvorsprung in den Hinterschnitt des Verankerungskanals des ersten Profils eingepresst werden kann. Die Stellleiste selbst ist in dem erstellten Profilverbund an einer dem Hakenvorsprung gegenüberliegenden Seitenwand des Verankerungskanals abgestützt, um die Stellleiste an dieser Stelle ihrer Längserstreckung folgend festzulegen. Damit stellt bei diesem Stand der Technik die Stellleiste zugleich die Klemmleiste des Profilverbundes dar.

Bei diesem vorbekannten Profilverbund greift der Hakenvorsprung der Hakenleiste, an den die Stellleiste angeformt ist, in den Hinterschnitt des Verankerungskanals des ersten Profils ein. Der Hakenvorsprung ist innerhalb des Verankerungskanals an diesem nicht abgestützt. Das Widerlager zu der Abstützung der Stellleiste an der Seitenwand des Verankerungskanals befindet sich an der Außenseite des Hakenvorsprungs des ersten Profils. Zwischen der Außenfläche der Stellleiste und dem Boden des Verankerungskanals verbleibt ein Spalt. Dieser kann, wenn eine Wasserdichtigkeit oder eine dämpfende Wirkung in dem Profilverbund erzielt werden soll, zum Einbringen einer Füllmasse genutzt werden.

Auch wenn sich ein solcher Profilverbund über Jahre bewährt hat, wäre es wünschenswert, diesen dahingehend zu verbessern, dass der Profilverbund nicht nur wasser- und gasdicht, ohne eine zusätzliche Dichtmasse in Profilverbund einbringen zu müssen, sondern dass dieser auch ein verbessertes Querfestigkeitsverhalten aufweist.

Der Erfindung liegt somit die Aufgabe zugrunde, ein Verfahren vorzuschlagen, mit dem das Vorstehende erreicht werden kann.

Gelöst wird diese Aufgabe erfindungsgemäß durch ein Verfahren zum Herstellen eines Profilverbundes mit den Merkmalen des Anspruchs 1.

Bei diesem Profilverbund ist der in den Verankerungskanal des ersten Profils eingedrückte Hakenleistenabschnitt mit dem Hakenvorsprung und der Klemmleiste an zwei zueinander weisenden Wänden des ersten Profils abgestützt. Diese Zwei-Punkt-Abstützung unter Vorspannung innerhalb des Verankerungskanals erlaubt die Aufbringung einer besonders hohen Vorspannkraft zwischen den beiden miteinander in Eingriff gestellten Profilteilen. Auch wenn im Rahmen dieser Ausführungen die Abstützung der in dem Verankerungskanal eingebrachten Teile der Hakenleiste des anderen Profils mit Zwei-Punkt-Abstützung angesprochen ist, versteht es sich, dass an den zueinander weisenden Wänden des ersten Profils eine flächige Abstützung erfolgt, wenn auch zum Teil mit nur geringer Breite in Querrichtung der Profillängserstreckung gesehen. Mit dieser hohen Vorspannkraft wird die Ausbildung einer metallischen Dichtung erreicht, sodass ein solcher Profilverbund, ohne zusätzliche Dichtmaßen oder Dichtmaterialien zu benötigen, gas- und/oder wasserdicht ausgeführt werden kann. Vorteilhaft bei diesem Profilverbund ist, dass der Hakenvorsprung des den Verankerungskanal bereitstellenden ersten Profils in die von dem zweiten Profil mit ihrer Hakenleiste bereitgestellten Hakenaufnahme eingreift, jedoch in der Hakenaufnahme nicht, jedenfalls nicht unter nennenswerter Vorspannung stehend abgestützt ist. Infolgedessen ist eine in Querrichtung zur Längserstreckung der Profile des Profilverbundes wirkende Zone geschaffen, in der in diese Richtung auf den Profilverbund wirkende Zug- oder auch Drucklasten, solange diese eine bestimmte Größe nicht überschreiten, elastisch aufgenommen werden können. Bei einer Zuglast kann diese Zone durch eine gewisse Dehnung reagieren, ohne den Profilverbund zu beeinträchtigen und ohne die Gefahr einer Rissbildung. Insofern wird bei diesem Profilverbund, in Querrichtung desselben gesehen, der Haken des zweiten Profils zusammen mit seiner rückseitig angeformten Klemmleiste starr fixiert, während der Eingriff des Hakenvorsprunges der Hakenleiste des ersten Profils in die Hakenaufnahme des zweiten Profils eine gewisse Dehnbeweglichkeit, insbesondere auch im elastischen Bereich zulässt. Insofern wird bei diesem Profilverbund das klauenartige Ineinandergreifen der Hakenleisten für die Ausbildung einer solchen potentiellen Ausgleichszone zur Verbesserung des Querfestigkeitsverhaltens benutzt. Belastungen der vorgenannten Art können beispielsweise bei einer dynamischen Beanspruchung des Profilverbundes auftreten.

Gemäß einer ersten Ausführung des erfindungsgemäßen Profilverbundes ist vorgesehen, dass die Stellleiste rückseitig bezüglich des Hakenvorsprunges an die Hakenleiste des zweiten Profils angeformt ist und in dem erstellten Profilverbund die Klemmleiste bildet und dass der Abstand der Seitenwände des Verankerungskanals, gegen die die darin eingreifende Hakenleiste unter Vorspannung gestellt ist, kleiner als der Abstand der freien Stirnfläche der Stellleiste vor ihrem Umformen über die Außenseite der Hakenleiste bis zu der im Profilverbund der freien Stirnfläche der Stellleiste gegenüberliegenden Stelle im Hakenvorsprung ist.

Die hohen Stütz- bzw. Vorspannungskräfte können bei dieser Ausgestaltung der Erfindung bereitgestellt werden, ohne dass die Hakenleiste des den Verankerungskanal tragenden ersten Profils gegenüber der Materialstärke herkömmlicher Profile mit Hakenleisten der in Rede stehenden Art stabiler ausgebildet werden müsste. In geschickter Weise macht man sich bei diesem Profilverbund den Umstand zunutze, dass das Widerlager zu der Abstützung der Stellleiste an der einen Wand des Verankerungskanals mit einem besonders kleinen Hebel auf die Hakenleiste des den Verankerungskanal bereitstellenden ersten Profils wirkt, und zwar typischerweise im Bereich der Wurzel der Anformung dieser Hakenleiste an einen Gurt dieses Profils. Durch das Eindrücken des Hakenvorsprunges mit der rückseitig an seine Hakenleiste angeformten Stellleiste in den Verankerungskanal durch den Kaltfügeprozess wird die Fügekraft, die quer zur Höhe des Profilverbundes aufgebracht wird, in eine Vorspannungs- bzw. Haltekraft in Richtung der Höhe des Profilverbundes umgesetzt. Das durch die Zwei-Punkt Abstützung verhinderte, sich an den Fügeprozess anschließende Relaxationsbestreben hält die Vorspannung aufrecht, mit der die beiden einander bezüglich der Seitenwände des Verankerungskanals gegenüberliegenden Abstützflächen der Hakenleiste des zweiten Profils unter Vorspannung gegen die Seitenwände des Verankerungskanals wirken. Dabei hintergreift der Hakenvorsprung der in den Verankerungskanal eingebrachten Hakenleiste den Hakenvorsprung der Hakenleiste des ersten Profils, so dass beide Hakenleisten bezüglich ihrer Hakenvorsprünge klauenartig miteinander in Eingriff gestellt sind. Durch die Festlegung der in den Verankerungskanal eingebrachten Hakenleiste an ihrem Hakenvorsprung und ihrer Stellleiste, wobei beide Stützflächen unter Vorspannung sich an der jeweiligen Seitenwand des Verankerungskanals abstützen, ist zugleich die Stellleiste festgelegt. Bei einer solchen Ausgestaltung ist die festgelegte Stellleiste zugleich die Klemmleiste.

Die Außenseite der Stellleiste des zweiten Profils, wenn in den Verankerungskanal des ersten Profils durch den Kaltfügeprozess eingebracht, wirkt gegen den Boden des Verankerungskanals. Der durch das Kaltfügewerkzeug auf die Rückseite der Stellleiste ausgeübte Druck wird sodann über den Boden des Verankerungskanals in das den Verankerungskanal einfassende Material des ersten Profils eingebracht, was wiederum dazu führt, dass die Hakenleiste dieses Profils bestrebt ist, in die Hakenaufnahme der die Stellleiste tragenden Hakenleiste eingedrückt zu werden. Dieses Kraftmoment wirkt dem durch Eindrücken der Hakenleiste mit ihrem Hakenvorsprung und ihrer Stell- bzw. Klemmleiste in den Verankerungskanal dem dadurch bewirkten Spreizmoment bezüglich der Weite des Verankerungskanals entgegen. Bei einer solchen Ausgestaltung kann die auf die Stützflächen des Hakenvorsprunges und der Stellleiste des zweiten Profils wirkende Vorspannung noch größer vorgesehen sein, ohne ein Aufbiegen der Hakenleiste des ersten Profils befürchten zu müssen. Durch die zusätzliche Krafteinleitung in den Boden des Verankerungskanals werden die miteinander in Eingriff gestellten Hakenvorsprünge gegeneinander unter Vorspannung gestellt, sodass auf diese Weise ein besonders belastbarer spielfreier Profilverbund bereitgestellt ist. Geräusche, wie diese bei herkömmlichen Profilverbünden eintreten können, sind somit wirksam vermieden.

Der in den Hinterschnitt des Verankerungskanals einzubringende Hakenvorsprung weist vorzugsweise eine durch eine konvexe Krümmung mit einem Scheitel ausgebildete Stützfläche auf. Durch diese Maßnahme erfolgt eine Kraftkonzentration für den dann bezüglich seiner Breite kleinere Kontaktfläche mit der Seitenwand des Verankerungskanals. Die das Widerlager bildende Seitenwand ist entweder gerade ausgeführt oder mit einem größeren Radius gleichsinnig gekrümmt wie die Krümmung des Hakenvorsprunges, der daran unter Vorspannung zur Anlage gebracht ist bzw. werden soll.

Diejenige Seitenwand des Verankerungskanals, an der die Stellleiste abgestützt ist, ist gemäß einem Ausführungsbeispiel in Richtung zum Boden des Verankerungskanals geneigt. Dieses erleichtert ein Eindrücken der Stellleiste in den Verankerungskanal. Zudem kann die Neigung so ausgelegt sein, dass die zum Eindrücken der Stellleiste in den Verankerungskanal benötigte Kraft mit zunehmender Tiefe ansteigt.

Gemäß einer anderen Ausführung der Erfindung ist vorgesehen, dass die Stellleiste an das erste Profil benachbart zu der seiner Hakenleiste gegenüberliegenden Wand des Verankerungskanals angeformt ist und einen in Richtung zu dem Verankerungskanal weisenden, ihrer Längserstreckung folgenden Vorspannwulst trägt und der am Boden des Verankerungskanals in seinem dem Vorspannwulst gegenüberliegenden Abschnitt einen Spannvorsprung aufweist und das die Hakenleiste des zweiten Profils rückseitig bezüglich ihres Hakenvorsprunges die Klemmleiste trägt, auf die im erstellten Profilverbund der Vorspannwulst der Stellleiste und der Spannvorsprung des Bodens des Verankerungskanals unter Vorspannung stehend wirken, während die freie Stirnfläche der Stellleiste an der Außenseite der Hakenleiste des zweiten Profils in dem erstellten Profilverbund unter Vorspannung stehend abgestützt ist.

Bei dieser Ausführung wird die Zwei-Punkt-Abstützung unter Vorspannung innerhalb des Verankerungskanals des ersten Profils durch Aufbringen der in Richtung der Höhe des Profilverbundes wirkenden Vorspannkraft durch die Stellleiste bereitgestellt, wobei bei dieser Ausgestaltung die Hakenleiste des ersten Profils neben ihrem Hakenvorsprung eine rückseitig daran angeformte Klemmleiste aufweist. Diese ist zwischen der verankerungskanalsseitigen Seite der Stellleiste und dem Boden des Verankerungskanals unter Vorspannung stehend eingeklemmt. Die benötigte Vorspannung wird durch Vorsehen eines Vorspannwulstes auf Seiten der Stellleiste und eines Spannvorsprunges an der dem Vorspannungswulst gegenüberliegenden Seite des Bodens des Verankerungskanals erzielt. Durch die Geometrie des Vorspannwulstes und des Spannvorsprunges wird die Zwei-Punkt-Abstützung gebildet und innerhalb des Verankerungskanals definiert. Bei dieser Ausgestaltung stützt sich die Stellleiste mit ihrer freien Stirnfläche im Profilverbund an der Außenseite der Hakenleiste des zweiten Profils ab, und zwar ebenfalls unter Vorspannung stehend. Das Widerlager zum Aufbringen dieser Vorspannung wird durch den Hakenvorsprung des den Verankerungskanal tragenden ersten Profils bereitgestellt, der bezüglich der Hakenleiste des zweiten Profils der freien Stirnfläche der Stellleiste gegenüberliegt. Auf diese Weise wird bei dieser Ausgestaltung des Profilverbundes an einer zweiten Stelle außerhalb des Verankerungskanals eine unter Vorspannung stehende Abstützanordnung geschaffen, die die Anforderungen an eine metallische Dichtung erfüllt. Auch bei dieser Ausgestaltung sind die miteinander klauenartig in Eingriff gestellten Hakenleisten nur in Bezug auf den in den Verankerungskanal eingreifenden Abschnitt der Hakenleiste des zweiten Profils starr miteinander verbunden, sodass die bereits zu der ersten Ausführung beschriebene Längenausgleichszone in Querrichtung zur Längserstreckung der Profile vorhanden ist.

Um möglichst viel Kraft durch das Kaltfügen in die gewünschte Vorspannkraft umzusetzen, kann bei beiden der vorbeschriebenen Ausführungen vorgesehen sein, dass die die Stellleiste tragende Hakenleiste eine Taillierung im Bereich der Anbindung derselben an das Profil aufweist. Diese Taillierung ist in einem Ausführungsbeispiel als außenseitig in den Anbindungsbereich der Stellleiste eingebrachte Nut, bereitgestellt. Durch die Lage der Taillierung wird der Drehpunkt der Stellleiste definiert. Zugleich braucht dann weniger Kraft in die Umformarbeit der Stellleiste eingebracht zu werden.

Der Vorgang des Kaltfügens, bei dem die Stellleiste mittels eines Ziehdorns oder einer Rolle umgeformt wird, kann so ausgeführt werden, dass benachbart zu der freien Stirnfläche der Stellleiste Material des anderen Profils zu einem Verriegelungswulst geformt wird, der an der Rückseite der Stellleiste abgestützt ist. Auf diese Weise ist eine zusätzliche formschlüssige Verriegelung der Stellleiste bereitgestellt.

Bei den Profilen eines solchen Profilverbundes handelt es sich typischerweise um Strangpressprofile, hergestellt aus einer Leichtmetalllegierung, etwa einer Aluminiumlegierung. Ein derartiger Profilverbund kann aus einer Vielzahl von einzelnen, in der vorbeschriebenen Art und Weise miteinander verbundenen Profilen bereitgestellt sein. Ein Profilverbund lässt sich mit Profilen ausbilden, die nur einen Gurt aufweisen, ebenso wie mit solchen, die als Hohlkammerprofile ausgeführt sind und einen Obergurt und einen Untergurt aufweisen. Im letzteren Fall befinden sich Hakenleisten in der vorbeschriebenen Art sowohl angeformt an den Obergurt als auch an den Untergurt. Selbstverständlich sind auch Kombinationen der vorbeschriebenen Profile miteinander möglich.

Aufgrund des gas- und wasserdichten Profilverbundes können aus Profilen dieser Art Bauteile hergestellt werden, an die derartige Anforderungen gestellt sind, wie beispielsweise Batteriegehäuse, wie diese bei Elektrofahrzeugen zur Aufnahme der benötigten Batteriemodule eingesetzt werden.

Nachfolgend ist die Erfindung anhand von Ausführungsbeispielen unter Bezugnahme auf die beigefügten Figuren beschrieben. Es zeigen:
- **Fig. 1:**: Ein erstes Profil und ein zweites Profil gemäß einer ersten Ausgestaltung der Erfindung zur Ausbildung eines Profilverbundes,
- **Fig. 2:**: der aus den Profilen der Figur 1 hergestellte Profilverbund,
- **Fig. 3:**: eine vergrößerte Darstellung der miteinander in Eingriff zu stellenden Verbindungsglieder der beiden Profile vor dem Ausbilden des Profilverbundes in dem zu Figur 2 gestrichelt gekennzeichneten Ausschnitt,
- **Fig. 4:**: die miteinander in Eingriff gestellten Profile in dem in Figur 2 gezeigten Ausschnitt vor dem Erstellen einer Kaltfügeverbindung,
- **Fig. 5:**: der Profilverbund der Figur 2 in dem gekennzeichneten Ausschnitt in einer vergrößerten Darstellung,
- **Fig. 6:**: einen Schnitt durch einen Profilverbund, der demjenigen der Figur 5 entspricht, jedoch als Fotografie eines Musters, dessen Profile Aluminiumstrangpressprofile sind,
- **Fig. 7:**: in einem Ausschnitt ein aus zwei weiteren Profilen nicht zur Erfindung gehörenden Profilen zu erstellender Profilverbund, bei dem die beiden Profile mit ihren Verbindungsgliedern bereits miteinander in Eingriff gestellt sind, und
- **Fig. 8:**: der aus der Anordnung der Profile der Figur 7 erstellte Profilverbund nach Erstellen einer Kaltfügeverbindung.

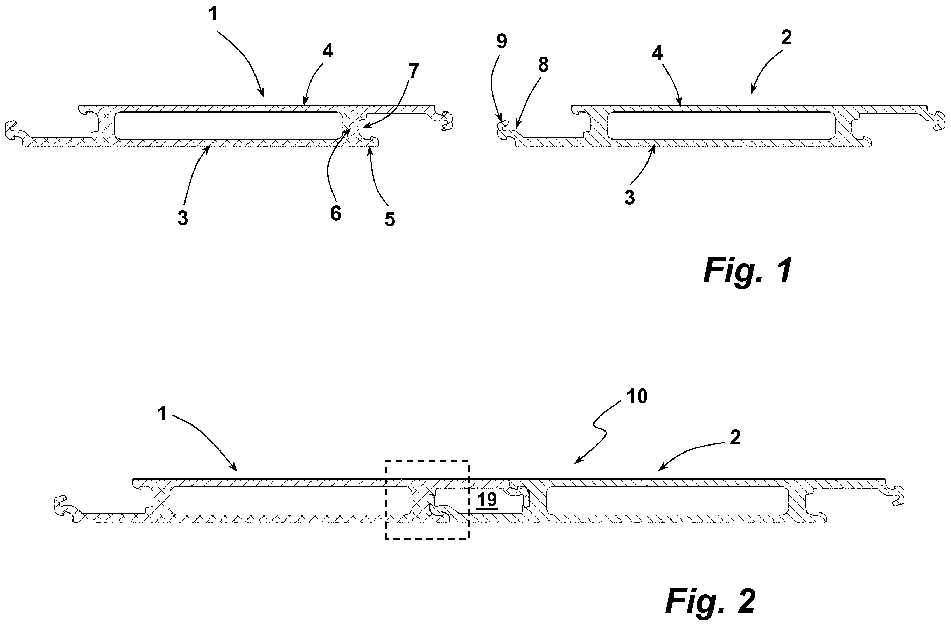

Figur 1 zeigt ein erstes Profil 1 und ein zweites Profil 2. Beide Profile 1, 2 sind bei dem dargestellten Ausführungsbeispiel identisch. Bei den Profilen 1, 2 handelt es sich um stranggepresste Hohlkammerprofile aus einer Aluminiumlegierung. Die Profile 1, 2 verfügen jeweils über einen Untergurt 3 und einen Obergurt 4. An den längsseitigen Enden der Gurte 3, 4 befinden sich jeweils zueinander weisend komplementäre Verbindungsglieder. Da es sich bei diesem Ausführungsbeispiel um Profile 1, 2 mit einem Untergurt 3 und einem Obergurt 4 handelt, befinden sich an jeder Längsseite zwei Verbindungsglieder, die jeweils mit den komplementären Verbindungsgliedern des anderen Profils zum Zwecke des Herstellens eines Profilverbundes in Eingriff gestellt und mittels eines Kaltfügeprozesses dauerhaft miteinander verbunden werden. Das erste Profil 1 trägt an seiner zu dem zweiten Profil 2 weisenden längsseitigen Begrenzung des Untergurtes 3 eine Hakenleiste 5. In einen den Untergurt 3 mit dem Obergurt 4 verbindenden Steg 6 ist außenseitig ein Verankerungskanal 7 eingebracht. Als komplementäres Verbindungsmittel trägt das zweite Profil 2 an ihrem zu dem ersten Profil 1 weisenden längsseitigen Ende ebenfalls eine Hakenleiste 8, dessen Hakenvorsprung jedoch in die entgegengesetzte Richtung weist wie der Hakenvorsprung der Hakenleiste 5. Diese Auslegung der Hakenleisten 5, 8 dient dem Zweck, dass diese im Profilverbund klauenartig mit einander in Eingriff gestellt sind (siehe Figur 2). An die Rückseite der Hakenleiste 8 ist eine Stellleiste 9 angeformt. Das Zusammenwirken dieser Verbindungsglieder ist nachstehend beschrieben.

An dem Obergurt 4 der beiden Profile 1, 2 sind mit einer umgekehrten Anordnung dieselben Verbindungsglieder angeordnet, die in Querrichtung der beiden Profile 1, 2 versetzt zu einander angeordnet sind.

Figur 2 zeigt die beiden zu einem Profilverbund 10 verbundenen Profile 1, 2. In den Figuren 1 und 2 ist beispielhaft ein Profilverbund 10 unter Verwendung von zwei Profilen 1, 2 gezeigt. Es versteht sich, dass eine Vielzahl derartiger Profile in derselben Art und Weise zu einem Profilverbund miteinander verbunden werden können. In dem dargestellten Ausführungsbeispiel sind als Profile 1, 2 Hohlkammerprofile gezeigt. Wie sich aus den nachstehenden Ausführungen ergibt, kann die nachstehend geschilderte Verbindungstechnologie auch zum Verbinden von Profilen eingesetzt werden, die nur einen Gurt aufweisen.

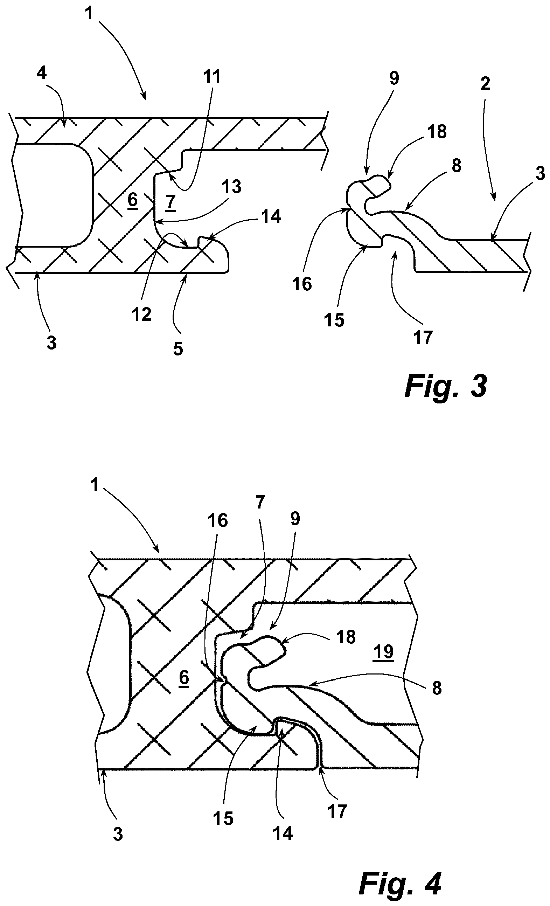

Die Ausbildung der noch nicht in Eingriff gestellten Verbindungsgliedern der beiden Profile 1, 2 der Untergurte 3 ist der vergrößerten Darstellung der Figur 3 zu entnehmen. Der Verankerungskanal 7 des ersten Profils 1 ist durch eine erste Seitenwand 11 und eine zweite Seitenwand 12, welche beiden Seitenwände 11, 12 durch einen Boden 13 miteinander verbunden sind, eingefasst. Die Seitenwand 12 des Verankerungskanals 7 ist durch den Hakenvorsprung 14 der Hakenleiste 5 in Querrichtung zur Längserstreckung des Profils 1 hinterschnitten. Die Seitenwand 11 ist in Richtung zum Boden 13 des Verankerungskanals 7 geneigt und wird für die Erstellung des Profilverbundes als Stellfläche genutzt.

An die Hakenleiste 8 des zweiten Profils 2 ist in Richtung zur Außenseite des Untergurtes 3 hin ein Hakenvorsprung 15 angeformt. Bezüglich des Hakenvorsprunges 15 ist die Stellleiste 9 rückseitig an die Hakenleiste 8 angeformt. Im Bereich der Anbindung der Stellleiste 9 an die Hakenleiste 8 ist in die in Richtung zu dem ersten Profil 1 weisende Außenseite eine der Längserstreckung der Hakenleiste 8 folgende Nut 16 eingebracht. Durch die Nut 16 ist im Anbindungsbereich der Stellleiste 9 an die Hakenleiste 8 eine Taillierung gebildet. Durch den Hakenvorsprung 15 ist in Richtung zum Untergurt 3 hin eine Hakenaufnahme 17 bereitgestellt, in die der Hakenvorsprung 14 des ersten Profils zum Ausbilden des Profilverbundes 10 eingreift.

Zur Ausbildung des Profilverbundes 10 werden in einem ersten Schritt die Hakenleisten 5, 8 mit ihren Hakenvorsprüngen 14, 15 miteinander in Eingriff gestellt. Dabei wird der Hakenvorsprung 15 des zweiten Profils 2 in den hinterschnittenen Teil des Verankerungskanals 7 und der Hakenvorsprung 14 in die Hakenaufnahme 17 der Hakenleiste 8 eingesetzt. Diese Stellung ist in Figur 4 gezeigt. Die Stellleiste 9 ist in dieser Vor-Fügestellung mit ihrer freien Stirnseite 18 von dem Verankerungskanal 7 des ersten Profils 1 wegweisend angeordnet.

In derselben Weise, wie dieses in Figur 4 zu den an den Untergurten 3 angeformten Verbindungsgliedern beschrieben ist, sind ebenfalls die Verbindungsglieder der Obergurte 4 der beiden Profile 1, 2 in Eingriff gestellt. In dieser Stellung weisen die Stellleisten 9 mit ihren freien Stirnflächen 18 in Richtung zu einander. Zum Herstellen des Profilverbundes wird ein Kaltfügeschritt durchgeführt, damit die beiden Profile 1, 2 anschließend durch eine Kaltfügeverbindung dauerhaft miteinander verbunden sind. Zu diesem Zweck wird durch die durch Zusammenstecken der beiden Profile 1, 2 geschlossene Kammer 19 ein Umformwerkzeug in Richtung der Längserstreckung der beiden Profile 1, 2 hindurch gezogen. Durch diesen Kaltumformschritt wird jede Stellleiste 9 in den Verankerungskanal 7 des jeweilig anderen Profils eingepresst. Das Einpressen wird durch die geneigte ausgeführte Seitenwand 11 des Verankerungskanals 7 unterstützt.

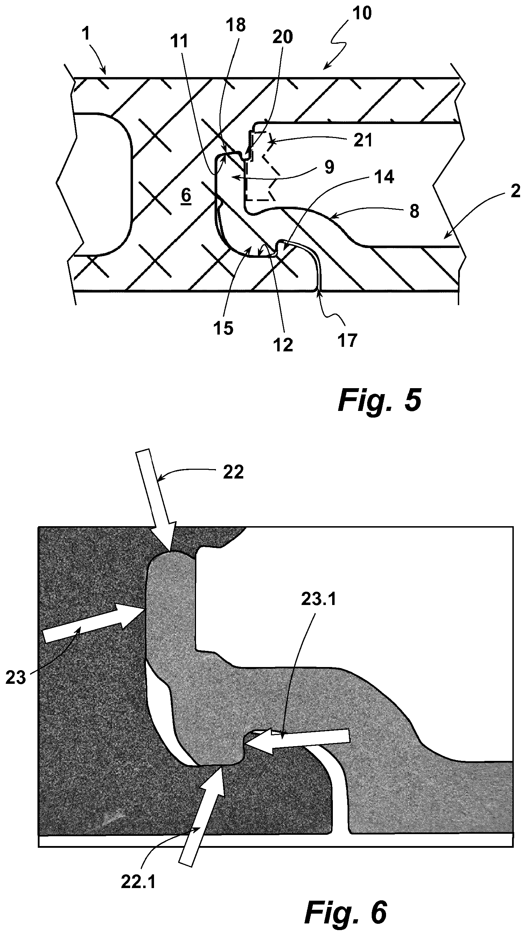

Figur 5 zeigt den unter Verwendung eines Ziehdorns oder zwei einander gegenüberliegender Rollen als Umformwerkzeug hergestellten Profilverbund 10. Durch die Umformung der Stellleiste 9 ist diese insgesamt in den Verankerungskanal 7 eingepresst worden. Somit bildet bei diesem Ausführungsbeispiel die Stellleiste 9 zugleich die Klemmleiste, da diese in dem Profilverbund 10 in dem Verankerungskanal 7 des ersten Profils 1 unter Vorspannung stehend festgesetzt ist. Die freie Stirnfläche 18 der Stellleiste 9 stützt sich in dem Profilverbund 10 (siehe Figur 5) an der Seitenwand 11 ab. In Folge des Umformprozesses ist der umgeformten freien Stirnfläche 18 gegenüberliegende Abschnitt des Kopfes des Hakenvorsprunges 15 gegen die der Seitenwand 11 gegenüberliegende Seitenwand 12 des Verankerungskanals 7 gepresst worden. Da der Abstand zwischen der freien Stellfläche 18 zu derjenigen Stelle, an der der Kopf des Hakenvorsprunges 15 an der Seitenwand 12 anliegt, im nicht umgeformten Zustand der Stellleiste 9 größer ist als nach der Umformung, ist die Hakenleiste 8 mit der freien Stirnfläche 18 ihrer Stellleiste 9 und dem Kopf des Hakenvorsprunges 15 in einer Zwei-Punkt-Abstützung in dem Verankerungskanal 7 unter Vorspannung festgelegt, wobei sich die beiden Stützflächen - freie Stirnseite 18 der Stellleiste 9 (einerseits) und Außenseite des Hakenvorsprunges 15 (andererseits) - in Bezug auf die Wirkrichtung der Vorspannung einander in Richtung der Höhe des Profilverbundes 10 gegenüber liegen. Durch die Umformung der Stellleiste 9 ist die eingebrachte Kraft in eine in Querrichtung zu der aufgebrachten Kraft verlaufende Richtung umgesetzt worden. Eine Relaxation ist wirksam durch die Seitenwände 11, 12 des Verankerungskanals verhindert, sodass die Vorspannung dauerhaft erhalten bleibt. Durch die Nut 16 ist der Drehpunkt der Stellleiste 9 definiert. Dies dient dem Zweck, dass die aufgebrachte Kraft über die freie Stirnfläche 18 der Stellleiste 9 und die gegenüberliegende Außenseite des Hakenvorsprunges 15 in das erste Profil 1 eingeleitet wird. Durch den Umformvorgang werden die zueinander weisenden Klauenflächen der Hakenvorsprünge 14, 15 bis zu ihrer gegenseitigen Anlage aneinander zueinander geführt, sodass in Quererstreckung der Profilverbund 10 spielfrei ist.

Bei dem dargestellten Ausführungsbeispiel ist an der freien Stirnfläche 18 der Stellleiste 9 sowie an der gegenüberliegenden Außenseite des Hakenvorsprunges 15 mit den Seitenwänden 11 bzw. 12 des Verankerungskanals 7 jeweils eine metallische Dichtung ausgebildet. Diese Verbindung ist gasdicht.

Zur zusätzlichen Sicherung der Stellleiste 9 ist bei diesem Ausführungsbeispiel der Umformprozess mittels des eingesetzten Umformwerkzeuges derart ausgeführt worden, dass aus dem Material des ersten Profils 1 ein Verriegelungswulst 20 geformt ist, der die Rückseite der Stellleiste 9 benachbart zu ihrer umgeformten freien Stirnfläche hintergreift. Hierdurch erfolgt eine zusätzliche formschlüssige Sicherung der in den Verankerungskanal 7 eingepressten Stellleiste 9.

Schematisiert ist in Figur 5 die Kontur eines Umformwerkzeuges 21 angedeutet, welches einen Versatz seiner Formfläche aufweist, um den Verriegelungswulst 20 auszubilden.

Bei dem dargestellten Ausführungsbeispiel ist diejenige Außenseite des Hakenvorsprunges 15, die in Kontakt mit der Seitenwand 12 gelangt, konvex ausgeführt. Dies hat zum Vorteil, dass eine Kraftkonzentration der Vorspannkraft auf den Abschnitt der Wölbung erfolgt, der an der bei dem dargestellten Ausführungsbeispiel mit einem größeren Krümmungsradius ausgeführten Seitenwand 12 anliegt. Auf diese Weise wird die Vorspannkraft und die Ausbildung der gewünschten metallischen Dichtung weiter verbessert.

Von Besonderheit bei dem Profilverbund 10 ist, dass keine kraftschlüssige Verbindung zwischen der Außenseite des Hakenvorsprunges 14 und der Hakenaufnahme 17 gegeben ist. Vielmehr kann an dieser Stelle ein kleiner Spalt verbleiben. Im Falle einer Querbelastung dient somit dieser gekrümmte Spalt und die Krümmung der Hakenleiste 8, durch welche Krümmung die Hakenaufnahme 17 bereitgestellt ist, als Längenausgleichszone, in der in Querrichtung zur Längserstreckung des Profilverbundes 10 angreifende Zugkräfte, insbesondere Zugkräfte jedenfalls bis zu einem gewissen Maße elastisch aufgefangen werden können. Sollen auch Schubkräfte elastisch aufgenommen werden, wird man den vorbeschriebenen Spalt mit einer gewissen Spaltbreite ausbilden. Erwähnenswert ist, dass ein solcher Längenausgleich erfolgt, ohne dass hierdurch die Kaltfügeverbindung zwischen den beiden Profilen 1, 2 beeinträchtigt ist.

Während in den vorbeschriebenen Figuren der erstellte Profilverbund 10 schematisiert beschrieben ist, zeigt Figur 6 eine Anschlifffotografie eines Schnittes durch zwei Profile, deren Geometrie der vorbeschriebenen Geometrie der Profile 1, 2 entspricht. Die einander gegenüberliegenden Abstützpunkte, die unter Vorspannung stehend in Richtung der Höhe des Profilverbundes wirken, sind darin mit Blockpfeilen 22, 22.1 kenntlich gemacht.

Bei diesem Muster - gleiches gilt für das in den Figuren 1 bis 5 beschriebene Ausführungsbeispiel - ist die Stellleiste 9 mit ihrer Außenseite gegen den Boden 13 des Verankerungskanals 7 gepresst. Dieses bewirkt die Induzierung eines einer Aufweitbewegung des Verankerungskanals 7 entgegenwirkenden Momentes. Infolge dessen lässt sich dieser Profilverbund 10 mit besonders hohen Vorspannkräften ausbilden. Die diesbezüglichen Abstützpunkte sind in der Figur 6 mit den Bezugszeichen 23, 23.1 kenntlich gemacht, wobei als Widerlager für die Krafteinbringung in den Boden 13 des Verankerungskanals 7 die klauenartig miteinander in Eingriff gestellten Hakenvorsprünge 14, 15 dienen. Deutlich erkennbar ist zudem der vorhandene Spalt zwischen der Außenseite des benachbart zu der durch den Blockpfeil 22.1 gekennzeichneten Abstützfläche angeordneten Hakenvorsprunges 14 und der komplementären Hakenaufnahme des zweiten Profils. Durch die Festlegung der freien Stirnseite der Stellleiste in dem Verankerungskanal bleibt auch die auf den Boden des Verankerungskanals 7 wirkende Vorspannung dauerhaft erhalten.

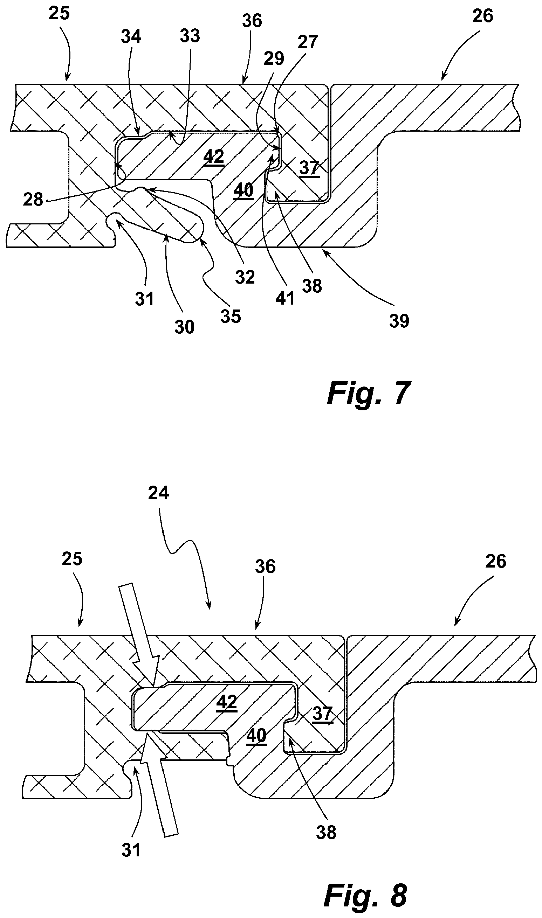

Figuren 7 und 8 zeigen einen weiteren Profilverbund 24, ebenfalls erstellt aus zwei durch eine Kaltfügeverbindung miteinander dauerhaft verbundenen Profilen 25, 26. Bei diesem Ausführungsbeispiel stellt das Profil 25 das erste Profil und das Profil 26 das zweite Profil dar. Bei den Profilen 25, 26 handelt es sich um solche mit nur einem Gurt. Die Profile 1, 2 unterscheiden sich bezüglich der Auslegung ihrer miteinander in Eingriff gestellten Verbindungsglieder von dem zuvor aus beschriebenen Ausführungsbeispiel. Das erste Profil 25 verfügt über einen seiner Längserstreckung folgenden Verankerungskanal 27. Dessen Seitenflächen 28, 29 sind im Unterschied zu der Ausgestaltung des ersten Profils 1 der vorstehend beschriebenen Figuren einander nicht bezüglich der Höhe des ersten Profils 25, sondern in Querrichtung zur Profillängserstreckung gegenüberliegend angeordnet. Von der Seitenwand 28 ist eine Stellleiste 30 abragend angeformt. Eine durch eine Nut 31 außenseitig eingebrachte Taillierung definiert die Schwenkachse der in Figur 7 vor dem Umformvorgang gezeigten Stellleiste 30. Die Stellleiste 30 trägt an ihrer in den Verankerungskanal 27 weisenden Seite einen Vorspannwulst 32. Der Boden 33 des Verankerungskanals 27 weist in seinem den Vorspannwulst 32 der Stellleiste 30 gegenüberliegenden Abschnitt einen Spannvorsprung 34 auf. Durch den Vorspannwulst 32 und den Spannvorsprung 34 sind diejenigen Flächen definiert, an denen eine metallische Dichtung ausgebildet werden soll. Die freie Stirnfläche 35 der Stellleiste 30 ist gerundet ausgeführt.

Die Hakenleiste des ersten Profils 25 ist mit dem Bezugszeichen 36 gekennzeichnet; der daran angeformte Hakenvorsprung mit dem Bezugszeichen 37. Bei diesem Ausführungsbeispiel trägt der Hakenvorsprung 37 zum Ausbilden eines im Bereich der Seitenwand 29 des Verankerungskanals 27 vorgesehenen Hinterschnittes einen zusätzlichen Hinterschnittvorsprung 38.

An die Hakenleiste 39 des zweiten Profils 26 ist der Hakenvorsprung 40 mit einem in den durch den Hinterschnittvorsprung 38 gebildeten Hinterschnitt des Verankerungskanals 27 eingreifenden Hinterschnittvorsprung 41 ausgerüstet. Rückseitig ist an die Hakenleiste 39 bzw. den Hakenvorsprung 40 eine Klemmleiste 42 angeformt, die sich in Richtung zu der Seitenwand 28 erstreckt und zwischen den Vorspannwulst 32 und den Spannvorsprung 34 reicht.

Zum Erstellen des Profilverbundes 24 wird die Stellleiste 30 aus ihrer in Figur 7 gezeigten Vor-Spannstellung mittels einer Rolle als Umformwerkzeug und einem entsprechenden Widerlager in ihre in Figur 8 gezeigte Stellung umgeformt. Durch diesen Umformprozess wird die Stellleiste 30 um den durch die Nut 31 definierten Drehpunkt in Richtung zur Klemmleiste 42 verstellt. Dabei wird der Vorspannwulst 32 umgeformt, um an dieser Stelle in Zusammenwirkung mit dem durch den Spannvorsprung 34 bereitgestellten Widerlager eine Zwei-Punkt-Vorspannabstützung bereit zu stellen, und zwar als metallische Dichtung zwischen den beiden ebenfalls aus einer Aluminiumlegierung hergestellten Profilen 25, 26. Durch den Umformvorgang der Stellleiste 30 wird ebenfalls die zunächst gerundet ausgeführte freie Stirnfläche 35 gegenüber der Außenseite der Hakenleiste 39 umgeformt und wirkt unter Vorspannung gegen diese Außenseite, wobei der Hinterschnittvorsprung 38 mit seiner zu der Stellleiste 30 weisenden Seite als Widerlager wirkt. Somit ist die Stellleiste 30 auch bei diesem Ausführungsbeispiel durch einen Verriegelungswulst gesichert. Somit sind bei diesem Profilverbund 24 an jeweils zwei einander gegenüberliegenden Positionen metallische Dichtungen ausgebildet.

Zugleich wird durch das Einpressen des Hakenvorsprunges 40 zwischen der Stellleiste 30 und den Hinterschnittvorsprung 38 der Profilverbund 24 in der Richtung der Profile 25, 26 spielfrei gehalten. Auch bei diesem Ausführungsbeispiel schließt sich an die Klemmzone des Hakenvorsprunges 41 in Richtung zu dem zweiten Profil 26 hin eine Längenausgleichszone an, wie diese bereits zu dem Ausführungsbeispiel der Figuren 1 bis 6 beschrieben ist. Auch der Profilverbund 24 ist gas- und wasserdicht.

Die Erfindung ist anhand von Ausführungsbeispielen beschrieben worden. Ohne den Umfang der geltenden Ansprüche zu verlassen, ergeben sich für einen Fachmann zahlreiche weitere Ausgestaltungen, die Erfindung umzusetzen, ohne dass diese im Rahmen dieser Ausführungen im Einzelnen dargelegt werden müssten.

**Bezugszeichenliste**

| | | | |
|---|---|---|---|
| 1 | erstes Profil | 31 | Nut |
| 2 | zweites Profil | 32 | Vorspannwulst |
| 3 | Untergurt | 33 | Boden |
| 4 | Obergurt | 34 | Spannvorsprung |
| 5 | Hakenleiste | 35 | freie Stirnfläche |
| 6 | Steg | 36 | Hakenleiste |
| 7 | Verankerungskanal | 37 | Hakenvorsprung |
| 8 | Hakenleiste | 38 | Hinterschnittvorsprung |
| 9 | Stellleiste | 39 | Hakenleiste |
| 10 | Profilverbund | 40 | Hakenvorsprung |
| 11 | Seitenwand | 41 | Hinterschnittvorsprung |
| 12 | Seitenwand | 42 | Klemmleiste |
| 13 | Boden | | |
| 14 | Hakenvorsprung | | |
| 15 | Hakenvorsprung | | |
| 16 | Nut | | |
| 17 | Hakenaufnahme | | |
| 18 | Freie Stirnfläche | | |
| 19 | Kammer | | |
| 20 | Verriegelungswulst | | |
| 21 | Umformwerkzeug | | |
| 22,22.1 | Blockpfeil | | |
| 23,23.1 | Blockpfeil | | |
| 24 | Profilverbund | | |
| 25 | erstes Profil | | |
| 26 | zweites Profil | | |
| 27 | Verankerungskanal | | |
| 28 | Seitenfläche | | |
| 29 | Seitenfläche | | |
| 30 | Stellleiste | | |

## Patentansprüche

1. Verfahren zum Herstellen eines Profilverbundes mit einem ersten Profil (1) und mit einem längsseitig mit dem ersten Profil (1) verbundenen zweiten Profil (2), welche beiden Profile (1, 2) jeweils eine längsseitig angeformte Hakenleiste (5, 8) aufweisen, wobei der Hakenvorsprung (14) der Hakenleiste (5, 8) des ersten Profils (1) in die eine Richtung und der Hakenvorsprung (15) der Hakenleiste (8) des zweiten Profils (2) in die entgegengesetzte Richtung weisen und die Hakenleisten (5, 8) klauenartig miteinander in Eingriff gestellt worden sind, wobei das erste Profil (1) einen seiner Längserstreckung folgenden, durch seine Hakenleiste (5) bereitgestellten, einen Boden (13) aufweisenden Verankerungskanal (7) und die Hakenleiste (8) des zweiten Profils (2) eine daran angeformte Klemmleiste (9) aufweist, welche Hakenleiste (8) mit ihrem Hakenvorsprung (15) und ihrer Klemmleiste (9) in dem Verankerungskanal (7) des anderen Profils (1) durch eine Kaltfügeverbindung festgelegt wird, wobei zum Erstellen der Kaltfügeverbindung einer der beiden Hakenleisten (8) eine durch den Kaltfügeprozess umgeformte Stellleiste (9) umfasst, die in dem erstellten Profilverbund (10) mit ihrer freien Stirnfläche (18) unter Vorspannung stehend abgestützt ist, wobei die in dem Verankerungskanal (7) festgelegte Hakenleiste (8) des zweiten Profils (2) innerhalb des Verankerungskanals (7) des ersten Profils (1) an zwei einander in Richtung der Höhe des Profilverbundes (10) sich gegenüberliegenden Stellen in Folge der Kaltfügeverbindung unter Vorspannung gegen die daran angrenzenden Abschnitte des ersten Profils (1) gestellt ist und in dem Profilverbund (10) die Außenfläche der Stellleiste (9) gegen den Boden (13) des Verankerungskanals (7) wirkt, **dadurch gekennzeichnet, dass** der durch den Kaltfügeprozess auf die Rückseite der Stellleiste ausgeübte Druck über den Boden (13) des Verankerungskanals (7) in das den Verankerungskanal (7) einfassende Material des ersten Profils (1) eingebracht wird, was dazu führt, dass die Hakenleiste (5) dieses Profils (1) bestrebt ist, in die Hakenaufnahme (17) der die Stellleiste (9) tragenden Hakenleiste (8) des zweiten Profils (2) eingedrückt zu werden.

2. Verfahren nach Anspruch 1, **dadurch gekennzeichnet, dass** der Profilverbund (10) durch Kaltfügen erstellt wird und durch das Kaltfügen ein die Leiste (9) außenseitig verriegelnder Wulst (20) ausgebildet wird.

3. Verfahren nach einem der Ansprüche 1 oder 2, **dadurch gekennzeichnet, dass** die Profile (1, 2) Hohlkammerprofile sind und einen Obergurt (4) und einen Untergurt (3) aufweisen und dass die Profile mit ihren Obergurten (4) und Untergurten (3) jeweils durch einen solchen Profilverbund (10) miteinander verbunden werden.

## Claims

1. Method for producing a profile assembly having a first profile (1) and having a second profile (2) connected on its long side to the first profile (1), which two profiles (1, 2) each have a hook strip (5, 8) integrally formed on the long side, wherein the hook projection (14) of the hook strip (5, 8) of the first profile (1) points in the one direction and the hook projection (15) of the hook strip (8) of the second profile (2) points in the opposite direction, and the hook strips (5, 8) are brought into engagement with one another in a claw-like manner, wherein the first profile (1) has an anchoring channel (7) following its longitudinal extent, provided by its hook strip (5) and comprising a base (13), and the hook strip (8) of the second profile (2) has a clamping strip (9) which is integrally formed thereon, which hook strip (8) is secured by its hook projection (15) and its clamping strip (9) in the anchoring channel (7) of the other profile (1) by means of a cold-joining connection, wherein, in order to produce the cold-joining connection, one of the two hook strips (8) comprises an adjusting strip (9) which is formed by the cold-joining process, and which is supported in the produced profile assembly (10) by its free end face (18) while being under prestress, wherein the hook strip (8) of the second profile (2) secured in the anchoring channel (7) is placed under prestress within the anchoring channel (7) of the first profile (1) at two points situated opposite one another in the direction of the height of the profile assembly (10), under prestress with respect to the adjoining portions of the first profile (1) as a result of the cold-joining connection, and, in the profile assembly (10), the outer surface of the clamping strip (9) takes effect against the base (13) of the anchoring channel (7), **characterized in that** the pressure exerted by the cold-joining process onto the rear side of the clamping strip is applied by way of the base (13) of the anchoring channel (7) into the material of the first profile (1) encompassing the anchoring channel (7), which leads to the hook strip (5) of this profile (1) being braced in such a way as to be pressed into the hook receiver (17) of the hook strip (8) of the second profile (2), carrying the clamping strip (9).

2. Method according to claim 1, **characterized in that** the profile assembly (10) is produced by cold-joining, and, by the cold-joining, a flange (20) is formed which locks the strip (9) in position on the outside.

3. Method according to claim 1 or 2, **characterized in that** the profiles (1, 2) are hollow chamber profiles, and comprise an upper flange (4) and a lower flange (3), and that the profiles, with their upper flanges (4) and lower flanges (3) are connected to each other in each case by such a profile assembly (10).

## Revendications

1. Procédé de fabrication d'un assemblage de profilés avec un premier profilé (1) et un second profilé (2) assemblé longitudinalement avec le premier profilé (1), lesquels deux profilés (1, 2) présentent chacun une moulure d'accrochage (5, 8) mise en forme longitudinalement, la saillie de crochetage (14) de la moulure d'accrochage (5, 8) du premier profilé (1) étant orientée dans une direction et la saillie de crochetage (15) de la moulure d'accrochage (8) du second profilé (2), dans la direction opposée, et les moulures d'accrochage (5, 8) ayant été mises en prise l'une avec l'autre à la manière d'un crochet, le premier profilé (1) présentant un canal d'ancrage (7) qui suit son étendue longitudinale, mis à disposition par sa moulure d'accrochage (5), comportant un fond (13), et la moulure d'accrochage (8) du second profilé (2) présentant, moulé sur celui-ci, une moulure de serrage (9), laquelle moulure d'accrochage (8) avec sa saillie de crochetage (15) et sa moulure de serrage (8) est positionnée et fixée dans le canal d'ancrage (7) de l'autre profil (1) au moyen d'un jointage à froid, l'une des deux moulures d'accrochage (8) comportant, afin de réaliser le jointage à froid, une moulure d'ajustement (9) déformée par le processus de jointage à froid laquelle est, dans le cadre de la réalisation de l'assemblage de profilés (10), en appui avec précontrainte par sa face frontale (18) libre, la moulure d'accrochage (8) du second profilé (2), positionnée et fixée dans le canal d'ancrage (7), étant, à l'intérieur du canal d'ancrage (7) du premier profilé (1), positionnée avec précontrainte en deux endroits orientés, dans le sens de la hauteur de l'assemblage de profilés (10), dans des directions opposées l'une par rapport à l'autre à la suite du jointage à froid, contre les tronçons avoisinants du premier profilé (1) et la surface extérieure de la moulure d'ajustage (9) agissant dans l'assemblage de profilés (10), contre le fond (13) du canal d'ancrage (7), **caractérisé en ce que** la pression exercée sur la face arrière de la moulure d'ajustement au cours du processus de jointage à froid est transférée par le fond (13) du canal d'ancrage (7) sur le matériau englobant le canal d'ancrage (7) du premier profilé (1), ce qui a pour effet d'inciter la moulure d'accrochage (5) de ce profilé (1) à être repoussée dans le logement d'accrochage (17) de la moulure d'accrochage (8) du second profilé (2) supportant la moulure d'ajustement (9).

2. Procédé selon la revendication 1, **caractérisé en ce que** l'assemblage de profilés (10) est réalisé par jointage à froid et que le jointage à froid forme à l'extérieur de la moulure (9) un bourrelet de verrouillage (20).

3. Procédé selon l'une des revendications 1 ou 2, **caractérisé en ce que** les profilés (1, 2) sont des profilés à âme creuse et comportent une aile supérieure (4) et une aile inférieure (3) et que les profilés avec leurs ailes supérieures (4) et ailes inférieures (3) sont respectivement assemblés par un tel assemblage de profilés (10).
